# EUROPEAN PATENT APPLICATION

(11) **EP 1 742 223 A2**
(43) Date of publication of application: **10.01.2007**
(21) Application number: 06253349.2
(22) Date of filing: 27.06.2006
(51) Int. Cl.: G11B 33/00

(54) **Disk device**

(30) Priority: 30.06.2005 JP 2005191198
(71) Applicant: ORION ELECTRIC CO., Ltd., Fukui 915-8555 (JP)
(72) Inventor: Sakano, Kenji, c/o IPD, Echizen-city Fukui 915-8555 (JP)
(74) Representative: Paget, Hugh Charles Edward

(57) **Abstract**

The invention provides a disk device used both horizontally and vertically, having a fall-proof mechanism of a disk medium provided at low cost, and capable of reducing noise caused by the fall-proof mechanism. The disk device comprises cuts 123 for forming tongued portions 122, engagement portions 124 formed to portions where the tongued portions 122 overlap when the tongued portions 122 are folded back toward a disk loading recess 121, and engagement receiving portions 125 formed on the tongued portions 122 to be engaged with the engagement portions 124, wherein disk stopper members constituting a fall-proof mechanism of the disk medium are formed by folding back the tongued portions 122 and engaging the engagement portions 124 with the engagement receiving portions 125.

## Description

### BACKGROUND OF THE INVENTION

### Field of the Invention

The present invention relates to a disk device for reading, writing or reading and writing signals on a disk medium, and more specifically, relates to a disk device used in a vertical arrangement having a characteristic fall-proof mechanism of the disk medium.

### Description of the Related Art

Disk media such as CDs and DVDs are utilized widely since they can be handled easily, and along therewith, the use of various electronic devices utilizing disk devices for recording and/or reproducing data on disk media is spreading widely. Some types of electronic devices have the disk device arranged vertically (in which the disk medium is loaded vertically), and if the vertically positioned disk device is of a so-called tray type disk device, there is a member provided on the tray for locking and preventing the disk medium from falling when the disk medium is loaded on the tray. Japanese Patent Application Laid-Open Publication No. 2003-217276, Japanese Patent Application Laid-Open Publication No. 2004-220738, and Japanese Patent Application Laid-Open Publication No. 2004-234724 (Patent documents 1 through 3) disclose prior arts related to this field of art.

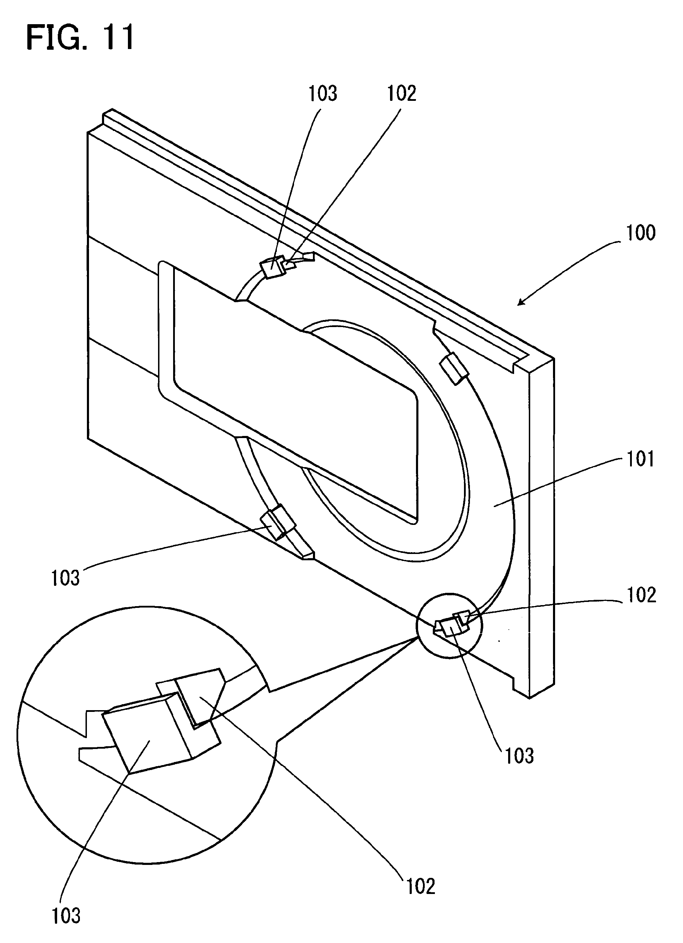

All the above-mentioned prior arts basically prevent the disk medium from falling by providing claw portions protruded from the outer circumference portion of a recess provided on the tray for loading the disk. FIG. 11 illustrates one example of a disk tray of a vertical-type disk device according to the prior art. As illustrated, if the claw portions 103 preventing the disk medium from falling are integrally molded with a disk tray 100, as a matter of convenience, openings 102 are formed to areas opposing to the claw portions 103 on the recess for loading the disk (disk loading recess 101). Since the disk device rotates the disk medium at high speed when recording and/or reproducing data on the disk medium or the like (note that the speed is increasing, and this trend of increase in rotation speed is considered to continue), the openings 102 formed near the rotating disk medium causes wind noise and thus become a source of noise in the disk device.

Even if the claw portions 103 are integrally molded with the disk tray 100, it is possible to prevent openings 102 from being created by using a slide core for the mold, but in that case, the costs of molds (such as manufacturing costs and maintenance costs) are increased, and additional steps for removing and attaching the slide core is required in the manufacturing process of the disk tray 100, according to which the production efficiency is deteriorated. In addition, a mold joint of the slide core may appear as a line on the surface of the disk loading recess 101 on which the disk is to be loaded, deteriorating the design of the surface of the disk loading recess 101 which is visible to the user.

On the other hand, if the claw portions 103 are not integrally molded with the disk tray 100 but formed as separate members and bonded to the disk tray, the bonding process is required additionally and the claw portions 103 formed as separate members require additional costs (such as manufacturing costs and maintenance costs).

### SUMMARY OF THE INVENTION

In consideration of the above-mentioned problems of the prior art, the present invention aims at providing a disk device that can be used vertically, having a fall-proof mechanism for a disk medium provided at low cost and having reduced the noise caused by the fall-proof mechanism.

Aspect 1 of the present invention provides a disk device for reading, writing or reading and writing signals on a disk medium, comprising a disk tray disposed in slidable manner with respect to a frame constituting an exterior frame of the disk device and having a disk loading recess for loading the disk medium, characterized in that a cut or intermittent cuts for forming a tongued portion is provided on a portion of the disk tray outside the area in which the disk loading recess is formed, the cut formed so that a base of the tongued portion is disposed toward the side of the disk loading recess, and when the tongued portion is folded back toward the disk loading recess, at least a portion of an end of the tongued portion overlaps the disk loading recess.

According to the present arrangement, a tongued portion formed on the disk tray can be integrally molded with the disk tray without using a slide core for the mold and without forming an opening on the disk loading recess, and the tongued portion can be folded back toward the disk loading recess to form a stopper member (claw portion) for preventing the disk medium from falling.

Aspect 2 of the present invention provides a disk device according to aspect 1, wherein a tongued portion retention member is provided for retaining the tongued portion in a state being folded back toward the disk loading recess, and the disk stopper member is formed by retaining the tongued portion in the state being folded back toward the disk loading recess with the tongued portion retention member.

According to the above arrangement, the disk stopper member (claw portions) is formed by retaining the tongued portion with the tongued portion retention member.

Aspect 3 of the present invention provides a disk device according to aspect 2, wherein the tongued portion retention member is formed by providing an engagement portion or an engagement receiving portion on a portion of the disk tray outside the area in which the disk loading recess is formed and where the tongued portion being folded back toward the disk loading recess overlaps, and providing an engagement receiving portion or an engagement portion to be engaged with the engagement portion or the engagement receiving portion on the tongued portion.

According to the above arrangement, the disk stopper member is formed by engaging the engagement portion or the engagement receiving portion formed on the disk tray with the engagement receiving portion or the engagement portion formed on the tongued portion.

Aspect 4 of the present invention provides a disk device according to any one of aspects 1 through 3, wherein the plate thickness of the area of the tongued portion to be folded is reduced compared to the plate thickness of the other areas of the tongued portion.

According to the above arrangement, the cross-sectional plate thickness of the area of the tongued portion to be folded when the tongued portion is folded back to form the disk stopper member is reduced in thickness.

Aspect 5 of the present invention provides a disk device according to any one of aspects 1 through 4, wherein an end of the tongued portion is shaped so that when the tongued portion is folded back toward the disk loading recess, the end is shaped either along the outer circumference of the disk loading recess or substantially in parallel with a tangential line of the outer circumference of the disk loading recess.

According to the above arrangement, the shape of the portion of the disk stopper member overlapped with the disk loading recess formed by folding back the tongued portion has a shape corresponding to the outer circumference shape of the disk loading recess.

Aspect 6 of the present invention provides a disk device according to any one of aspects 1 through 5, wherein at least one of plural tongued portions is formed on a frontward area toward which the disk tray is ejected with respect to the disk loading recess.

According to the above arrangement, the disk stopper member is formed toward the side from which the disk is taken out with respect to the disk loading recess.

### BRIEF DESCRIPTION OF THE DRAWINGS

FIG. 1 is a perspective view showing the outline of the exterior of a disk device;
FIG. 2 is a perspective view showing the outline of the exterior of a disk tray;
FIG. 3 is an upper view showing the state prior to folding back tongued portions of the disk tray;
FIG. 4 is an upper view showing the state after folding back the tongued portions of the disk tray;
FIG. 5 is a cross-sectional view taken along line A-A of FIG. 3;
FIG. 6 is a cross-sectional view taken along line A-A of FIG. 3 showing the state in which the disk medium is loaded;
FIG. 7 is a view showing another example of the engagement portion and the engagement receiving portion;
FIG. 8 is a view showing yet another example of the engagement portion and the engagement receiving portion;
FIG. 9 is an upper view showing the state in which the tongued portions are folded back according to another example of the disk tray;
FIG. 10 is an upper view showing the state prior to folding back the tongued portions according to another example of the disk tray; and
FIG. 11 is a perspective view showing one example of a disk tray according to the prior art.

### DETAILED DESCRIPTION OF THE PREFERRED EMBODIMENTS

The preferred embodiments of the present invention are described with reference to the drawings. The preferred embodiments described here are mere examples for realizing the present invention, and they do not restrict the scope of the present invention.

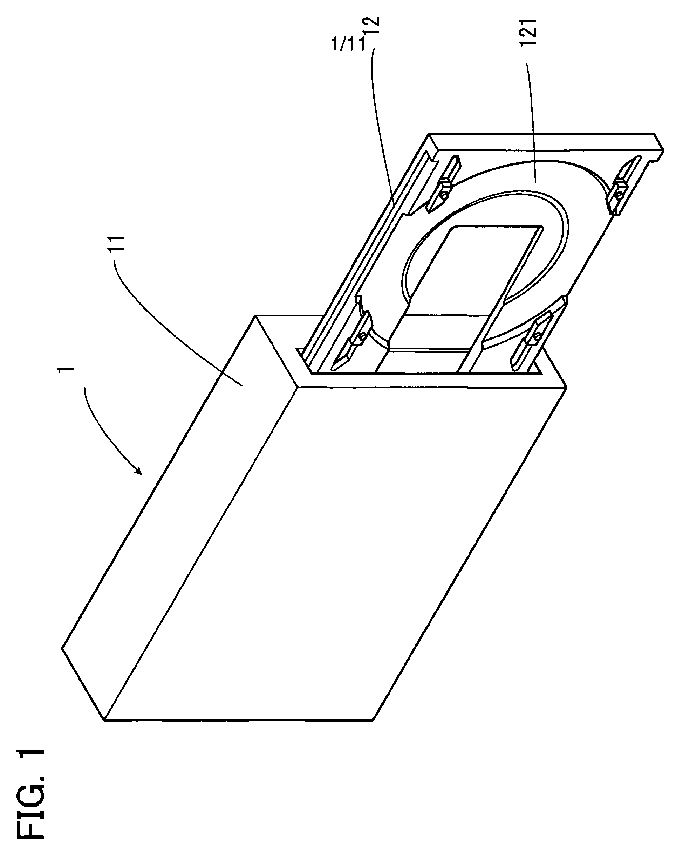

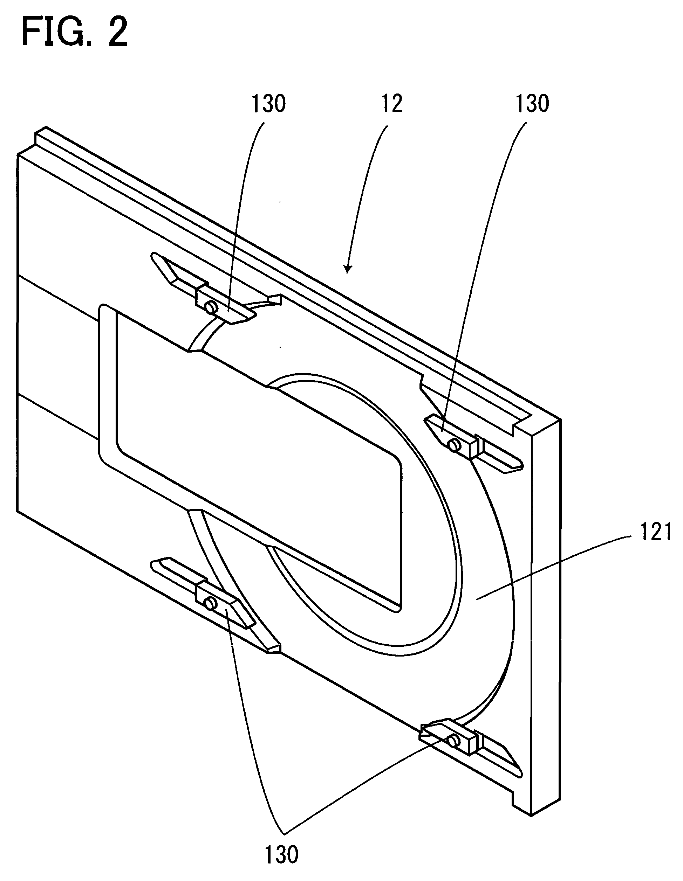

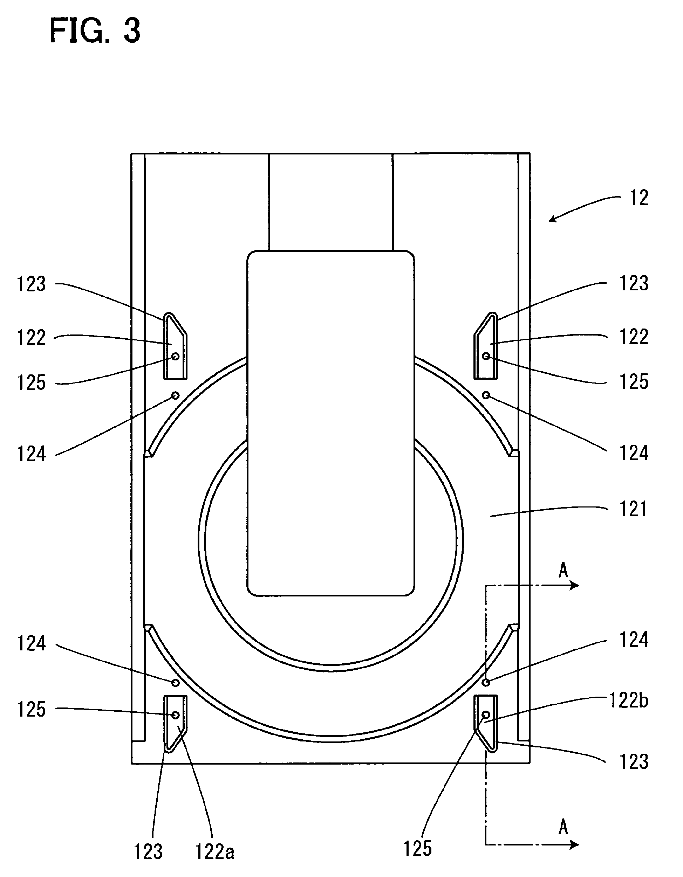

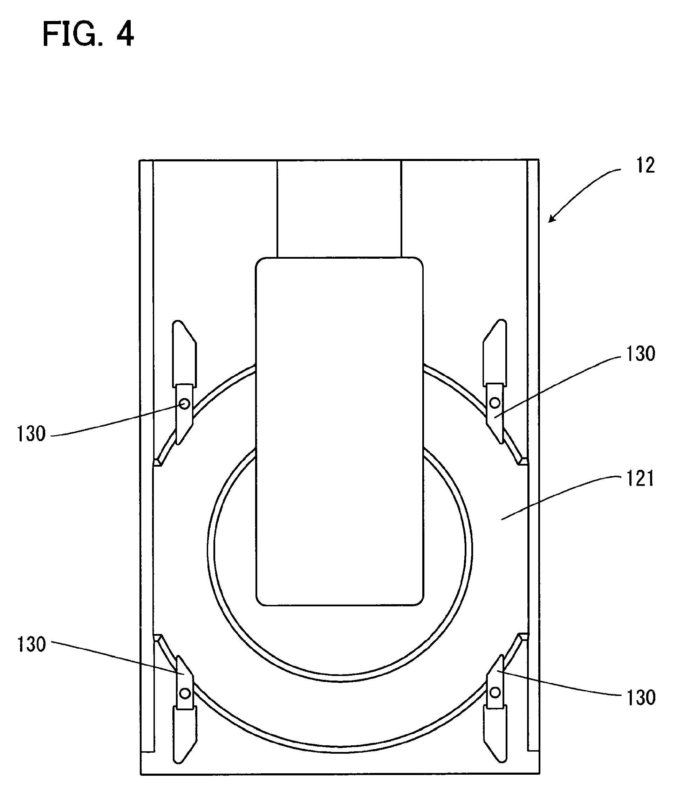

FIG. 1 is a perspective view showing the outline of the exterior of the disk device according to the present embodiment, and FIG. 2 is a perspective view showing the outline of the exterior of the disk tray provided to the disk device. FIG. 3 is an upper view showing the state prior to folding back the tongued portions of the disk tray, and FIG. 4 is an upper view showing the state after the tongued portions are folded back.

As shown in FIG. 1, a disk device 1 of the present embodiment comprises a disk tray 12 capable of being moved in sliding motion with respect to a frame 11 composing the outer frame of the disk device. The disk tray 12 has a disk loading recess 121 for loading a disk medium 2.

FIG. 3 is an upper view of a disk tray 12 showing the state prior to forming disk stopper members 130 (refer to FIG. 2). As shown in the drawing, the disk tray 12 has cuts 123 for forming tongued portions 122 formed on the portions outside the area in which a disk loading recess 121 is formed, and the cuts are formed so that the base of the tongued portions 122 are placed near the disk loading recess 121, and so that when the tongued portions 122 are folded back toward the disk loading recess 121, at least a portion of the leading ends of the tongued portions 122 are overlapped with the disk loading recess 121. Furthermore, engagement portions 124 are formed at portions outside the area in which the disk loading recess 121 is formed and where the tongued portions 122 being folded back toward the disk loading recess 121 overlap, and engagement receiving portions 125 to be engaged with the engagement portions 124 are formed on the tongued portions 122.

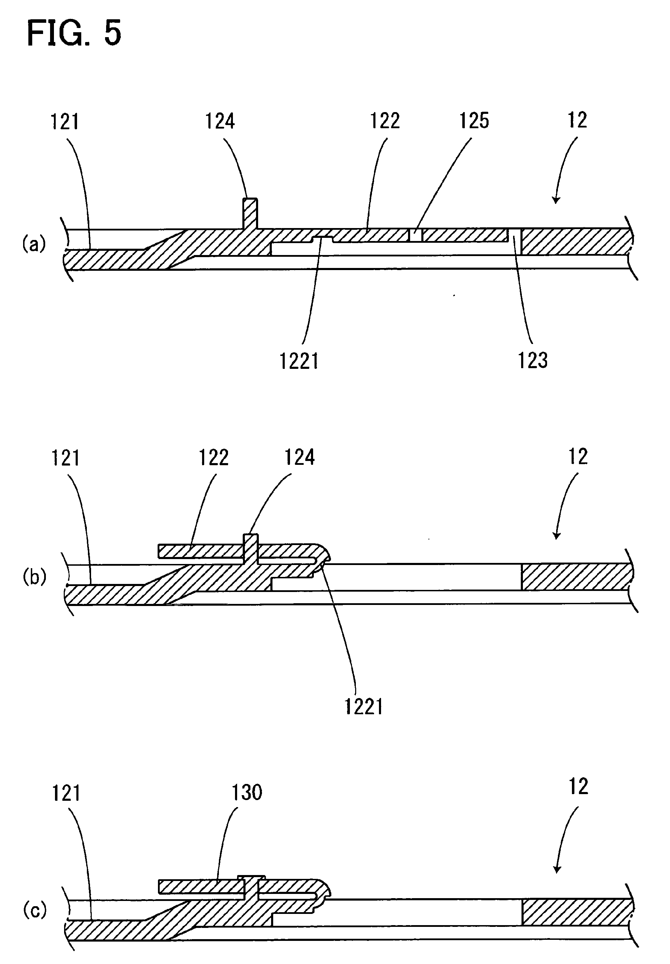

FIG. 5 is a cross-sectional view of the portion of the disk tray 12 where the tongued portion 122 is to be formed (cross-sectional view taken along line A-A of FIG. 3). As shown in FIG. 5 (a), the thickness of the area of the tongued portion 122 to be folded back is reduced compared to the other areas of the tongued portion 122. As shown in FIG. 5 (b), by folding back the tongued portion 122 at the thin plate portion 1221, engaging the engagement receiving portion 125 with the engagement portion 124 and bonding them together, a disk stopper member 130 is formed (FIG. 5(c)). FIG. 4 is an upper view of the disk tray 12 showing the state in which the disk stopper members 130 are formed (and FIG. 2 is a perspective view of the same). As shown, the disk stopper members 130 are formed so that the leading ends of the tongued portions 122 are overlapped with the disk loading recess 121, and at the same time, the shape of the leading ends of the tongued portions 122 corresponds to the shape of the outer circumference of the disk loading recess 121 (the shape of the leading ends of the tongued portions 122 is substantially parallel with the tangential line of the outer circumference of the disk loading recess 121).

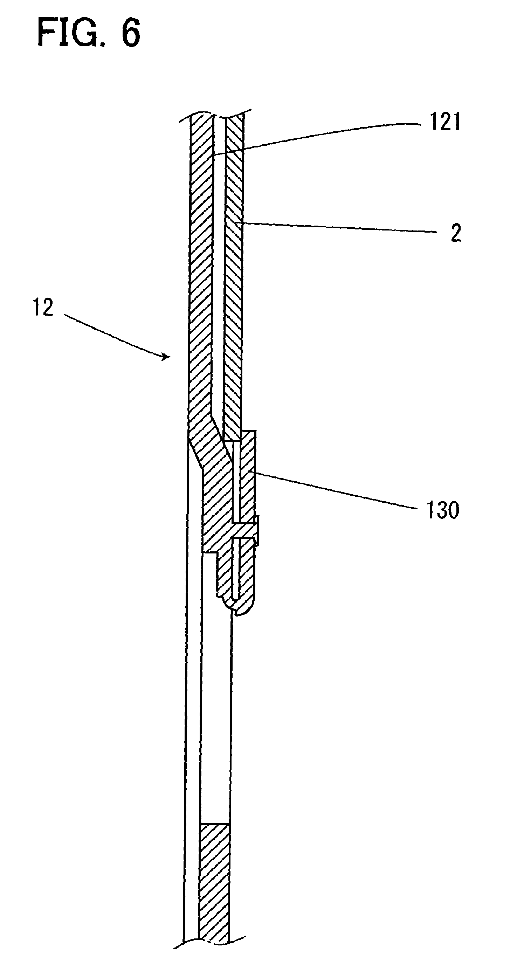

FIG. 6 is a cross-sectional view taken along line A-A of FIG. 3 showing the state in which a disk medium 2 is loaded on the disk tray 12 (disk loading recess 121), further showing the state in which the disk medium 2 is locked by the disk stopper members 130. As shown, the disk medium 2 is prevented from falling by the disk stopper members 130.

As described, according to the disk device 1 of the present embodiment, the tongued portions 122, the engagement portions 124 and the engagement receiving portions 125 are integrally molded with the disk tray 12 without using a slide core for the mold and without forming an opening on the disk loading recess 121, and the disk stopper members 130 for preventing the disk medium from falling can be formed by the tongued portions 122 and so on. Accordingly, there are no drawbacks according to the present embodiment such as the increase of mold costs caused by using slide cores and lines appearing on the disk loading recess 121 caused by mold joints of slide cores, and moreover, the present embodiment enables to cut down the number of manufacturing steps and costs compared to the case in which the disk stopper members 130 are formed as separate members from the disk tray 12 and bonded thereto. Furthermore, there is no need to form openings 102 on the disk loading recess 101 as in the case of a prior art disk tray 100 illustrated in FIG. 11, so the present embodiment can effectively reduce the generation of wind noise.

Furthermore, since the shape of the portion of the disk stopper members 130 overlapped with the disk loading recess 121 (end of the tongued portions 122) corresponds to the outer circumference shape of the disk loading recess 121, the disk stopper members 130 will not interfere with the disk medium 2 when it is loaded on the disk loading recess 121, so the loading operation of the disk medium 2 is facilitated, and the disk medium 2 is prevented from being damaged during loading operation. In addition, since the tongued portion 122a and the tongued portion 122b (FIG. 3) are formed on the front side toward which the disk tray 12 is ejected with respect to the disk loading recess 121, and the disk stopper members 130 formed by the tongued portions 122a and 122b are also formed on the side toward which the disk is taken out, even if the mechanism for retaining the disk medium 2 (not shown) experiences some failure or if the disk medium 2 is damaged during recording and/or reproducing operation of the disk medium 2 (that is, during high-speed rotation of the disk medium 2), causing the disk medium 2 or broken pieces thereof to shatter, the disk stopper members 130 prevents the disk medium 2 or broken pieces thereof from flying out to the exterior of the device. Furthermore, the disk tray according to the present embodiment can be used both in a vertical-type and horizontal-type disk device without preparing separate members, simply by forming the disk stopper members 130 for preventing the disk from falling for vertical-type disk devices and by not forming the disk stopper members 130 (not folding back the tongued portions 122) in horizontal-type disk devices, so the present disk device enables to reduce the generation of wind noises in vertical-type devices at low costs (since there is no protrusion of disk stopper members 130 (leading end of the tongued portions 122) near the disk rotating at high-speed).

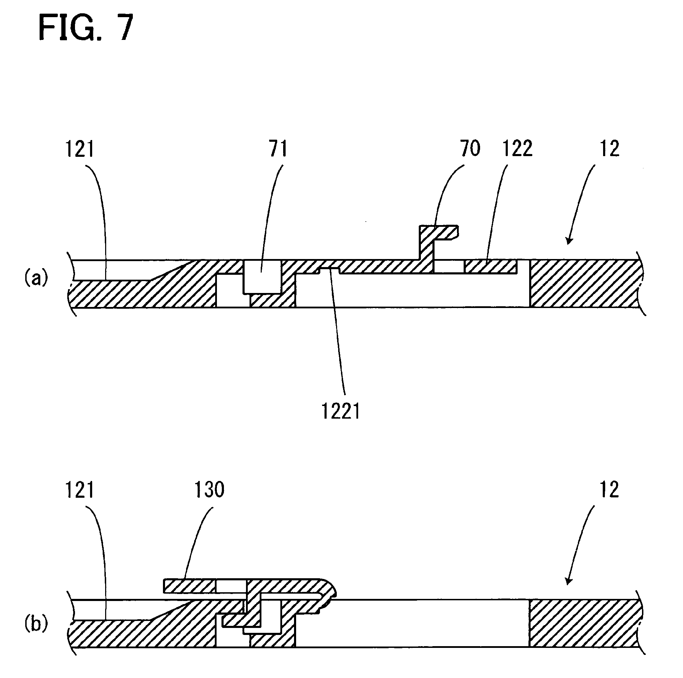

According to the present embodiment, the engagement portion is formed as a protruded projection and the engagement receiving portion is formed as a through hole to which the projection is inserted, which are fixed to each other via bonding (wherein the engagement portion and the engagement receiving portion constitute a tongued portion retention member), but the present invention is not restricted thereto, and the tongued portion retention member can be formed of other structures (such as screw engagement). For example, as shown in the cross-sectional view of FIG. 7, the tongued portion retention member can be composed of a hook-shaped engagement portion 70 and an engagement receiving portion 71 which is a receiving portion to which the engagement portion 70 is inserted. According to the present embodiment, the engagement portion is formed on the disk tray 12 and the engagement receiving portion is formed on the tongued portion 122, but as shown in FIG. 7, it is possible to form the engagement portion on the tongued portion 122 and the engagement receiving portion on the disk tray 12. By adopting the arrangement shown in FIG. 7, it is possible to further facilitate the operation of forming the disk stopper members. Moreover, according to this arrangement, it is even possible in some cases to return the once-folded tongued portion 122 back to its original position (in such case, it is possible to take some kind of measures for preventing the tongued portion 122 returned to its original position from being bent by elastic force at the bent portion (such as by providing a member for stopping the tongued portion 122 at its extended state)), so that when there is no need for disk stopper members 130 (such as when the disk device is used horizontally), the generation of wind noise can be reduced by eliminating (not forming) the disk stopper members 130.

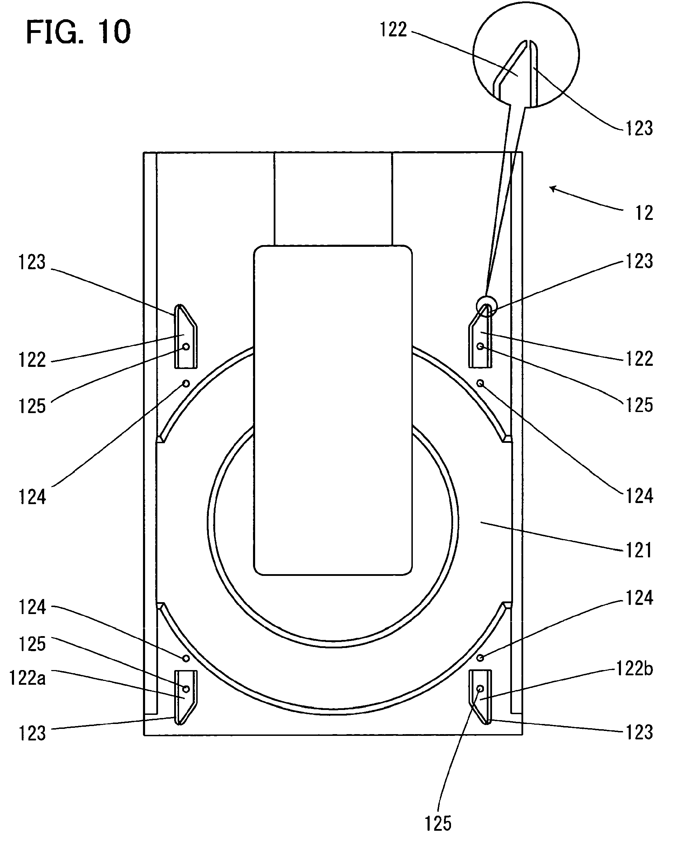

Upon considering the case in which the disk tray 12 is used in a horizontal-type disk device (in which the disk stopper members 130 are not required), as shown in FIG. 10, it is possible to improve the stability of the tongued portions 122 not being folded back (and not forming the disk stopper members 130) by forming an intermittent portion in the cut 123 for forming each tongued portion 122 (according to which the tongued portion 122 is prevented from being bent undesirably at the thin plate portion 1221). In this case, by forming the "intermittent portion in the cut 123" to have a thinner plate thickness than the other areas, similar to the thin plate portion 1221, the operation for cutting off the "intermittent portion in the cut 123" to fold back the tongued portion can be facilitated.

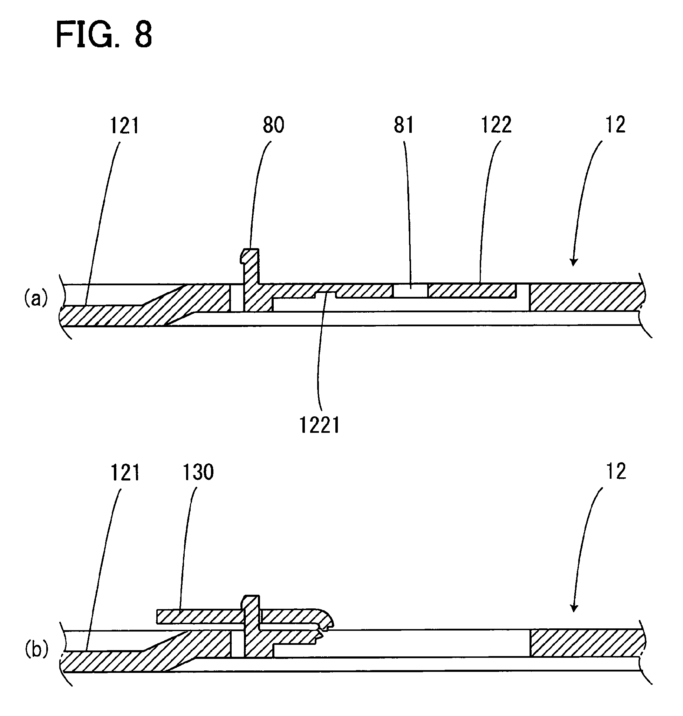

Further, as shown in cross-section in FIG. 8, by adopting an engagement portion 80 having a hooked end and an engagement receiving portion 81 formed as a hole for receiving the engagement portion 80 having an inner diameter size which is substantially the same as the outer diameter size of the engagement portion 80, the engagement between the engagement portion and the engagement receiving portion is enhanced, so that the tongued portion 122 can be locked onto the disk tray 12 only via the engagement portion, according to which the tongued portion 122 can be cut off from the disk tray 12 at the thin plate portion 1221 (folded portion) when it is folded back (FIG. 8(b)).

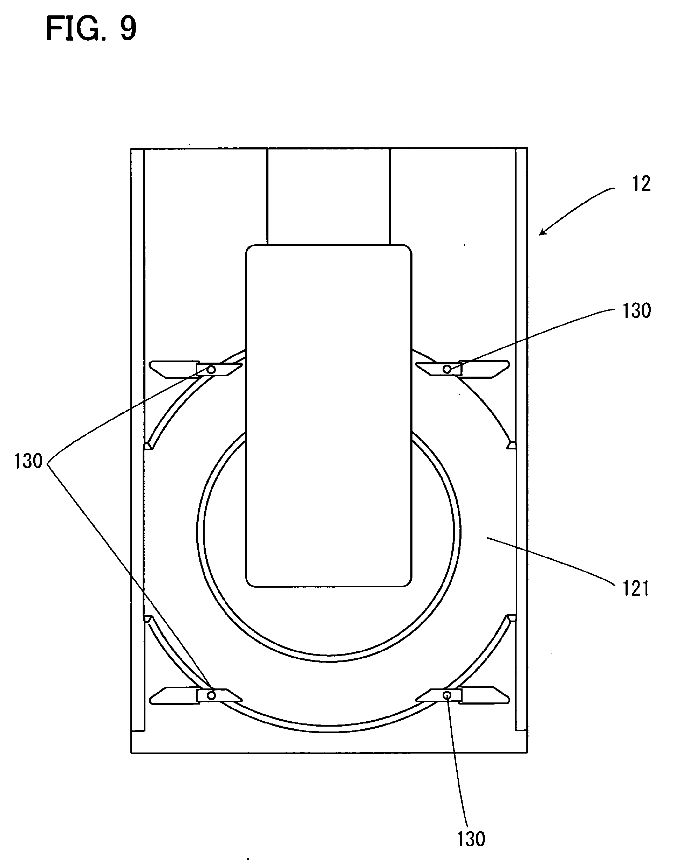

Further, as shown in FIG. 9, it is possible to arrange the tongued portions 122 (disk stopper members 130) to be arranged perpendicularly with respect to the sliding direction of the disk tray 12 (of course, the angle of tongued portions 122 are not limited to those illustrated in the present embodiments).

The effects of the present invention are as follows.

According to aspect 1 providing a disk device for reading, writing or reading and writing signals on a disk medium, comprising a disk tray disposed in slidable manner with respect to a frame constituting an exterior frame of the disk device and having a disk loading recess for loading the disk medium, characterized in that a cut or intermittent cuts for forming a tongued portion is provided on a portion of the disk tray outside the area in which the disk loading recess is formed, the cut formed so that a base of the tongued portion is disposed toward the side of the disk loading recess, and when the tongued portion is folded back toward the disk loading recess, at least a portion of an end of the tongued portion overlaps the disk loading recess; the tongued portion can be integrally molded with the disk tray without using a slide core for the mold and without forming any openings on the disk loading recess, and the tongued portion can be used to form the stopper member (claw portion) for preventing the disk medium from falling, so the present invention enables to form the stopper member (claw portion) as a fall-proof means of the disk medium at low cost (since there is no need to prepare separate components (claw portion) and there is no need to use a slide core for the mold which increases the cost of the mold), and even further, since there is no opening formed on the disk loading recess, the generation of wind noise can be reduced.

According to aspect 3 of the present invention providing a disk device according to aspect 2, wherein the tongued portion retention member is formed by providing an engagement portion or an engagement receiving portion on a portion of the disk tray outside the area in which the disk loading recess is formed and where the tongued portion being folded back toward the disk loading recess overlaps, and providing an engagement receiving portion or an engagement portion to be engaged with the engagement portion or the engagement receiving portion on the tongued portion; the disk stopper member can be formed by folding back the tongued portion and engaging the engagement portion or the engagement receiving portion formed on the disk tray with the engagement receiving portion or the engagement portion formed on the tongued portion, so the disk stopper member can be created through a simple operation.

According to aspect 4 of the present invention providing a disk device according to any one of aspects 1 through 3, wherein the plate thickness of the area of the tongued portion to be folded is reduced compared to the plate thickness of the other areas of the tongued portion; the cross-sectional plate thickness of the portion of the tongued portion to be folded is reduced, and the operation for folding back the tongued portion to create the disk stopper member is facilitated.

According to aspect 5 of the present invention providing a disk device according to any one of aspects 1 through 4, wherein an end of the tongued portion is shaped so that when the tongued portion is folded back toward the disk loading recess, the end is shaped either along the outer circumference of the disk loading recess or substantially in parallel with a tangential line of the outer circumference of the disk loading recess; the portion of the disk stopper member overlapped with the disk loading recess is shaped to correspond to the outer circumference shape of the disk loading recess, so the disk stopper member is prevented from interfering with the disk medium when the medium is loaded onto the disk loading recess, the operation for loading the disk medium is facilitated, and the disk medium is prevented from being scratched.

According to aspect 6 of the present invention providing a disk device according to any one of aspects 1 through 5, wherein at least one of plural tongued portions is formed on a frontward area toward which the disk tray is ejected with respect to the disk loading recess; the disk stopper member is formed on the area close to the side from which the disk is ejected with respect to the disk loading recess, so that in case any defect is caused in the mechanism for retaining the disk medium (clamper mechanism) during operation such as recording or reproducing of the disk medium (during which time the disk is rotated at high speed), or in case the disk medium breaks (normally, the disk rarely breaks during reproduction or the like, but if the user uses a damaged disk, the disk may break), the disk medium or the broken pieces thereof are prevented from shattering by the disk stopper member, and are suppressed from flying out to the exterior of the disk device.

## Claims

1. A disk device for reading, writing or reading and writing signals on a disk medium, comprising a disk tray disposed in slidable manner with respect to a frame constituting an exterior frame of the disk device and having a disk loading recess for loading the disk medium, **characterized in that** a cut or intermittent cuts for forming a tongued portion is provided on a portion of the disk tray outside the area in which the disk loading recess is formed, the cut formed so that a base of the tongued portion is disposed toward the side of the disk loading recess, and when the tongued portion is folded back toward the disk loading recess, at least a portion of an end of the tongued portion overlaps the disk loading recess.

2. The disk device according to claim 1, wherein a tongued portion retention member is provided for retaining the tongued portion in a state being folded back toward the disk loading recess, and the disk stopper member is formed by retaining the tongued portion in the state being folded back toward the disk loading recess with the tongued portion retention member.

3. The disk device according to claim 2, wherein the tongued portion retention member is formed by providing an engagement portion or an engagement receiving portion on a portion of the disk tray outside the area in which the disk loading recess is formed and where the tongued portion being folded back toward the disk loading recess overlaps, and providing an engagement receiving portion or an engagement portion to be engaged with the engagement portion or the engagement receiving portion on the tongued portion.

4. The disk device according to any one of claims 1 through 3, wherein the plate thickness of the area of the tongued portion to be folded is reduced compared to the plate thickness of the other areas of the tongued portion.

5. The disk device according to any one of claims 1 through 4, wherein an end of the tongued portion is shaped so that when the tongued portion is folded back toward the disk loading recess, the end is shaped either along the outer circumference of the disk loading recess or substantially in parallel with a tangential line of the outer circumference of the disk loading recess.

6. The disk device according to any one of claims 1 through 5, wherein at least one of plural tongued portions is formed on a frontward area toward which the disk tray is ejected with respect to the disk loading recess.
